# EUROPÄISCHE PATENTSCHRIFT

(11) **EP 1 356 967 B1**
(45) Veröffentlichungstag und Bekanntmachung des Hinweises auf die Patenterteilung: **28.12.2005**
(21) Anmeldenummer: 03007747.3
(22) Anmeldetag: 04.04.2003
(51) Int. Cl.: B60J 3/02

(54) **Sonnenblendschutzeinrichtung für ein Fahrzeug**
Sun blocking antiglare device for a vehicle
Dispositif pare-soleil et anti-éblouissement pour un véhicule

(30) Priorität: 22.04.2002 AT 6172002
(43) Veröffentlichungstag der Anmeldung: 29.10.2003
(73) Patentinhaber: Reichart, Otto, Ing., 6850 Dornbirn (AT)
(72) Erfinder: Reichart, Otto, Ing., 6850 Dornbirn (AT)
(74) Vertreter: Hefel, Herbert

(56) Entgegenhaltungen:
- DE-A- 1 915 554
- FR-A- 2 127 033
- PATENT ABSTRACTS OF JAPAN vol. 1996, no. 01, 31. Januar 1996 (1996-01-31) & JP 07 242121 A (NEOX LAB:KK), 19. September 1995 (1995-09-19)
- PATENT ABSTRACTS OF JAPAN vol. 008, no. 094 (M-293), 28. April 1984 (1984-04-28) & JP 59 008524 A (NISSAN JIDOSHA KK), 17. Januar 1984 (1984-01-17)

## Beschreibung

Die Erfindung betrifft Sonnenblendschutzeinrichtung für ein Fahrzeug mit mindestens einer aus- und einfahrbaren Jalousie, mittels der ein oberer Bereich einer Fahrzeugscheibe abdeckbar ist und die als Lamellen-Jalousie ausgebildet ist, welche mehrere Lamellen aufweist, die mit ihren Längsrändern aneinander angrenzen und flexibel miteinander verbunden sind, wobei die Lamellen-Jalousie in einem oberhalb der Fahrzeugscheibe liegenden Bereich von einer Führung geführt und getragen ist.

Bekannt sind herkömmliche Sonnenblenden für Kraftfahrzeuge, die im Gebrauchszustand nach unten verschwenkt werden und den oberen Teil der Windschutzscheibe abdecken, siehe die französische Patentschrift FR 2 172 033 A1. Neben handbetätigten derartigen Sonneblenden sind auch motorisch angetriebene Sonnenblenden bekannt, beispielsweise aus der US 5,013,952 A und EP 0 945 293 A1.

Aus der DE 19 633 192 C1 ist weiters eine Sonnenblende für die Windschutzscheibe eines Kraftfahrzeuges bekannt, bei der zur Vergrößerung der Abblendfläche aus dem Blendenkörper ein Verlängerungsteil teleskopartig ausgezogen werden kann.

Aus der DE 200 01 550 U1 ist weiters eine elektronische Sonnenblende bekannt, die über ein Schienensystem verfahrbar ist. Mittels eines Lichtsensors wird die Sonnenblende automatisch zu der abzublendenden Stelle geführt.

Die DE 19 824 084 A1 zeigt weiters eine Blendschutzeinrichtung für ein Fahrzeug, wobei Sensoren vorgesehen sind, die die Richtung eines Blendobjekt erfassen, und mit Hilfe einer Kamera die Augenposition des Fahrers erfasst wird. Die Frontscheibe des Kraftfahrzeuges ist als Filterscheibe ausgebildet und besteht aus einer Vielzahl von Matrixelementen, die entsprechend der Position des Blendobjektes und der Augenposition des Fahrers abgedunkelt werden.

Eine Sonnenblendschutzeinrichtung, bei der für den Fahrer und für den Beifahrer jeweils eine auf einer Welle aufgewickelte Jalousie vorgesehen ist, zeigt die DE 199 10 949 A1. Diese ausziehbaren Rollos ersetzen die herkömmlichen herunterklappbaren Sonnenblenden, wobei der Antrieb dieser Rollos motorbetrieben erfolgen kann. Weitere rollo- oder jalousienartige Sonnenblendschutzeinrichtungen sind aus der US 5,201,563 A und US 5,409,284 A bekannt. Bei allen diesen Blendschutzeinrichtungen besteht der Nachteil, dass Führungsteile für das Ausziehen der Blendschutzeinrichtung erforderlich sind, sodass diese Blendschutzeinrichtungen sich entweder über die gesamte Breite der Scheibe durchgehend erstrecken müssen oder es auch im hinaufgezogenen, nicht gebrauchten Zustand zu einer Sichtbehinderung durch vor den Fensterflächen liegenden Bauteilen kommt.

Eine Blendschutzeinrichtung der eingangs genannten Art ist aus der US 2002/0033616 A1 bekannt. Um Führungsteile im hinaufgezogenen Zustand zu vermeiden, können hierbei mit auszufahrende elastische Führungsstäbe vorgesehen sein, die das untere Ende der Blendschutzeinrichtung gegen die Fahrzeugscheibe drücken. Nachteilig hierbei ist es, dass der Antrieb stark genug ausgelegt werden muss, um die dadurch auftretende Reibung unter allen Verhältnissen sicher zu überwinden. Weiters kann es durch über die Scheibe laufende Teile zu Verschmutzungen derselben kommen. Weiters kann es beim Ausfahren der Blendschutzeinrichtung und im ausgefahrenen Zustand derselben zu Lärmbelästigungen kommen, beispielsweise wenn das Fahrzeug über Bodenunebenheiten fährt, wobei das freie Ende der Blendschutzeinrichtung von der Fahrzeugscheibe abgehoben werden kann und gegen diese zurückschlägt. Diese Probleme treten auch bei der aus der US 5,443,300 A bekannten Blendschutzeinrichtung auf, bei welcher Blendschutzpaneele motorisch aus- bzw. eingefahren werden.

Aufgabe der Erfindung ist es, eine Sonnenblendschutzeinrichtung der eingangs genannten Art bereitzustellen, bei der es im hinaufgezogenen, nicht gebrauchten Zustand zu keiner Sichtbehinderung durch vor den Fensterflächen liegenden Bauteilen kommt.

Erfindungsgemäß gelingt dies durch eine Sonnenblendschutzeinrichtung mit den Merkmalen des Patentanspruchs 1.

Durch die erfindungsgemäßen Maßnahmen ist die Lamellen-Jalousie in ihrem über den oberen Bereich einer Fahrzeugscheibe abgesenkten Zustand, wobei sie geneigt zur Vertikalen verläuft, selbsttragend, während die einzelnen Lamellen im zurückgezogenen Zustand flexibel miteinander verbunden sind, sodaß die Führung für die Lamellen zur Anpassung an den Verlauf des Fahrzeughimmels im Bereich oberhalb der Fensterscheibe gebogen ausgebildet sein kann.

Eine erfindungsgemäße Sonnenblendschutzeinrichtung kann manuell oder motorisch betätigbar ausgebildet sein. Im Falle einer motorischen Betätigung kann die Steuerung des Hinunter- und Hinauffahrens auch unter Verwendung einer Lichtsensoreinrichtung erfolgen. Bei einer erfindungsgemäßen Sonnenblendschutzeinrichtung können auch über die Breite der Windschutzscheibe mehr als zwei, beispielsweise vier Lamellen-Jalousien vorgesehen sein, die in Abhängigkeit von der Einfallrichtung des Sonnenlichts automatisch betätigt werden.

Weitere Vorteile und Einzelheiten der Erfindung werden im folgenden anhand der beiliegenden Zeichnung erläutert. In dieser zeigen:

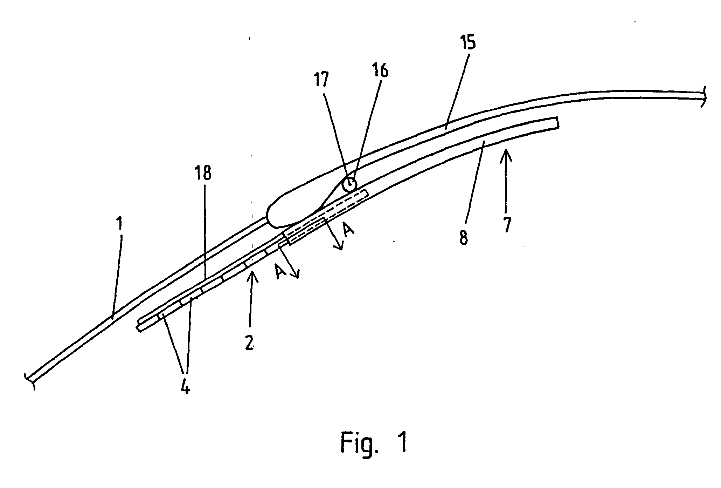

- Fig. 1: eine schematische Darstellung einer bei einer Frontscheibe angeordneten erfindungsgemäßen Blendschutzeinrichtung im ausgefahrenen Zustand in Seitenansicht;
- Fig. 2: einen Schnitt entlang der Linie AA von Fig. 1, aber im eingefahrenen Zustand der Lamellen-Jalousie;
- Fig. 3: einen Schnitt entsprechend Fig. 2 im teilweise ausgefahrenen Zustand der Lamellen-Jalousie;
- Fig. 4: einen Schnitt entlang der Linie BB von Fig. 2;
- Fig. 5: einen Schnitt entland der Linie CC von Fig. 3;
- Fig. 6: eine vergrößerte Darstellung der Seilrolle in einer Ansicht entsprechend Fig. 1, und
- Fig. 7: ein modifiziertes Ausführungsbeispiel in einer zu Fig. 5 analogen Schnittführung.

Bei dem in den Figuren schematisch dargestellten Ausführungsbeispiel einer erfindungsgemäßen Sonnenblendschutzeinrichtung ist die Fahrzeugscheibe 1, bei welcher die Blendschutzeinrichtung angeordnet ist, die Windschutzscheibe. Es ist eine Lamellen-Jalousie 2 vorgesehen, die mehrere an ihren Längsrändern 3 aneinander angrenzende Lamellen 4 aufweist. Zur Ermöglichung einer gegenseitigen Verschwenkung um parallel zu ihren Längsrändern 3 liegende Achsen sind die einzelnen Lamellen 4 flexibel miteinander verbunden, beispielsweise durch Bänder 5 oder Federn, welche durch Öffnungen 6 in den Lamellen 4 verlaufen, die in Längsrichtung der Lamellen-Jalousie 2 angeordnet sind, wobei die einzelnen Lamellen 4 an diesen Bändern 5 oder Federn befestigt sind.

In einem oberhalb der Fahrzeugscheibe 1 liegenden Bereich sind die Lamellen-Jalousien 2 von einer Führung 7 geführt und getragen. Diese Führung 7 wird im gezeigten Ausführungsbeispiel von Führungsschienen 8 gebildet, die U-förmige Aufnahmen aufweisen, in welche die Seitenränder 9 der Lamellen 4 ragen. Die Führung weist am vorderen Ende einen geraden Abschnitt auf, der sich mindestens über die Breite von zwei Lamellen erstreckt, und einen an diesen anschließenden gebogenen Abschnitt, der an die Form des Dachhimmels angepaßt ist.

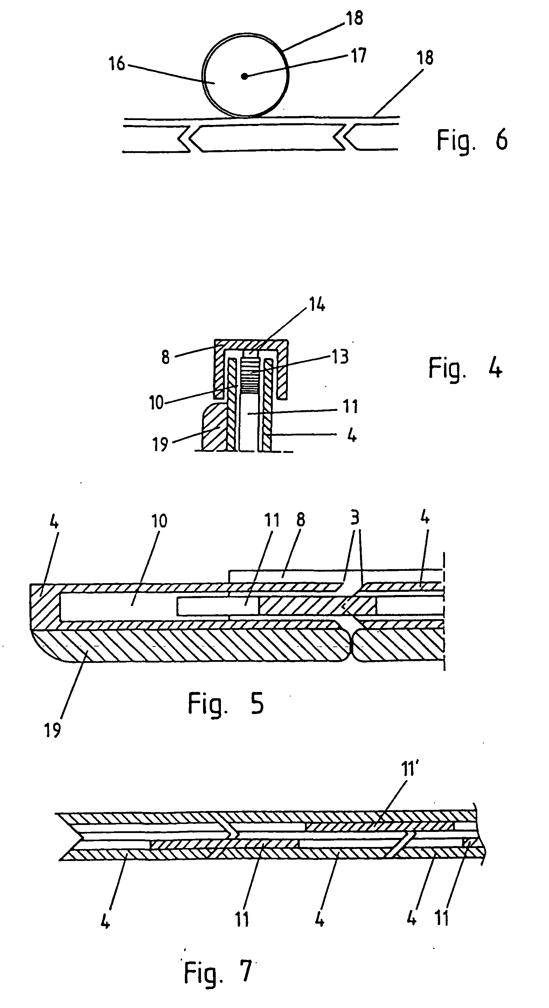

Beispielsweise können über die Breite der Windschutzscheibe vier nebeneinander angeordnete, von Führungen 7 geführte Lamellen-Jalousien 2 vorgesehen sein, wobei die Führungsschienen 8 zwischen zwei benachbarten Lamellen-Jalousien 2 beidseitig U-förmige Aufnahmen aufweisen, wie dies in Fig. 4 dargestellt ist.

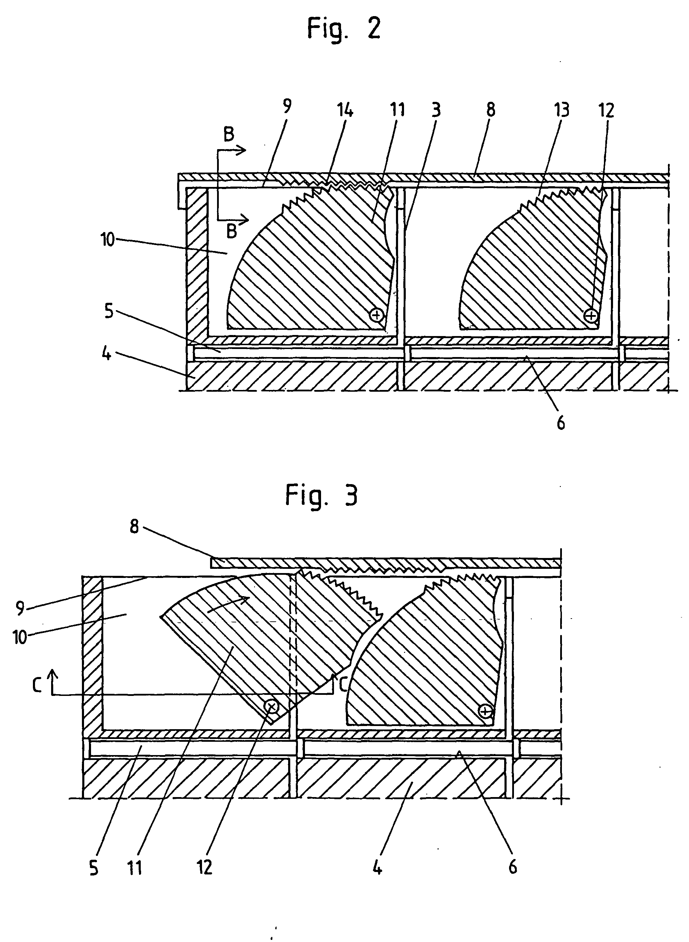

Im abgesenkten Zustand einer jeweiligen Lamellen-Jalousie 2 sind die den oberen Bereich der Fahrzeugscheibe 1 überdeckenden Lamellen sich gegenseitig abstützend ausgebildet. Hierzu weisen die Lamellen 4 in beidseitigen Randbereichen Hohlräume 10 auf, die zu den Längsrändern 3 in Richtung zu einer benachbarten Lamelle hin offen sind. Innerhalb dieser Hohlräume sind plattenförmige Verbindungsteile um senkrecht zu den Ebenen der Lamellen stehende Achsen 12 verschwenkbar gelagert. Im gezeigten Ausführungsbeispiel sind diese Verbindungsteile 11 etwa viertelkreisförmig ausgebildet. Über einen Abschnitt ihres kreisbogenförmigen Randes weisen die Verbindungsteile 11 Verzahnungen 13 auf. Die Führungsschienen 8 sind abschnittsweise als Zahnstangen mit Verzahnungen 14 ausgebildet, welche mit den Verzahnungen 13 der Verbindungsteile 11 zusammenwirken. Wenn eine jeweilige Lamelle 4 über den Bereich der Verzahnung 14 der Führungsschiene 8 verschoben wird, so verschwenkt sich diese zwangsweise um ihre Achse 12 und verschiebt sich dadurch teilweise in den Hohlraum 10 der benachbarten Lamelle 4. In Fig. 2 ist die Lamellen-Jalousie 2 in ihrer vollständig zurückgezogenen Position dargestellt, in welcher die Verbindungsteile 11 jeweils vollständig im Hohlraum 10 der eigenen Lamelle 4 liegen. In dieser Position der Verbindungsteile 11 sind die Lamellen 4 flexibel miteinander verbunden, sodaß die Führungsschienen 8 in Längsrichtung der Lamellen-Jalousie 2 im Anschluß an ihren vorderen geraden Abschnitt gebogen verlaufen können, um sich an den gebogenen Verlauf des Fahrzeughimmels 15 anzupassen.

In dem in Fig. 3 dargestellten Zustand wurde die Lamellen-Jalousie 2 soweit ausgefahren, daß sich die erste Lamelle 4 an den gezahnten Abschnitten der Führungsschienen 8 vorbeibewegt hat. Die Verbindungsteile 11 in den beiden randseitigen Hohlräumen 10 der ersten Lamelle 4 wurden dadurch in die in Fig. 3 dargestellte Position verschwenkt, in welcher sie in den Hohlraum 10 der zweiten Lamelle 4 ragen. Beim weiteren Ausfahren der Lamellen-Jalousie 2 wiederholt sich dieser Vorgang nacheinander für alle ausgefahrenen Lamellen 4, sodaß sich diese über die Verbindungsteile 11 gegeneinander abstützen und dadurch bei einer geneigt zur Vertikalen liegenden Anordnung der Lamellen-Jalousie 2 selbsttragend sind. Beim Einfahren der Lamellen-Jalousie 2 werden die Verbindungsteile 11 nacheinander zwangsweise zurückverschwenkt, bis wiederum der in Fig. 2 dargestellte Zustand für alle Lamellen 4 eingenommen wird. Um diesen Vorgang ohne zu hohe Reibung zu ermöglichen, weisen die Führungsschienen im Bereich ihres vorderen Endes einen geraden Abschnitt auf, in welchem auch die gezahnten Abschnitte der Führungsschienen 8 liegen.

Die gezahnten Abschnitte der Führungsschienen 8, welche mit den Verzahnungen 13 der Verbindungsteile 11 zusammenwirken, bilden somit bei diesem Ausführungsbeispiel eine Betätigungseinrichtung zum Verschwenken der Verbindungsteile 11 beim Aus- bzw. Einfahren der Lamellen-Jalousie 2. Andere Betätigungseinrichtungen, beispielsweise reibschlüssig wirkende sind denkbar und möglich. Auch könnten die Verbindungsteile 11 statt verschwenkbar verschiebbar gelagert sein. Weiters wäre es prinzipiell denkbar und möglich, die Verbindungsteile 11 anstelle einer Anordnung in einem Hohlraum einer jeweiligen Lamelle an der Unterseite der Lamelle anzuordnen.

Zum Ein- und Ausfahren der Lamellen-Jalousien 2 sind motorisch antreibbare Seilrollen 16 vorgesehen, die um Achsen 17 drehbar gelagert sind. Um eine Seilrolle 16 zur Betätigung einer Lamellen-Jalousie 2 ist ein Zugseil 18 gebunden, welches an der vordersten und hintersten Lamelle 4 der Lamellen-Jalousie 2 befestigt ist. Durch Drehung der Seilrolle 16 wird die Lamellen-Jalousie 2 aus- oder eingefahren. Zur Steuerung des motorischen Antriebs der Seilrollen 16 für die einzelnen Lamellen-Jalousien 2 in Abhängigkeit von der Einfallsrichtung des Sonnenlichts können Richtungssensitive Sonnenlichtdetektoren vorgesehen sein. Statt dessen könnten auch manuell antreibbare Seilrollen vorhanden sein, wobei für alle Lamellen-Jalousien (auch für eventuell an den Seitenfenstern angeordnete Lamellen-Jalousien) durch den Fahrer erreichbare Betätigungsschieber vorgesehen sein können, die über entsprechende Seilzüge mit den jeweiligen Seilrollen der Lamellen-Jalousien verbunden sind.

Die Lamellen 4 können aus unterschiedlichen Materialien ausgebildet sein, beispielsweise Aluminium, Kunststoff oder Holz. An ihren dem Fahrgastraum zuggewandten Unterseiten können Polsterungen 19 angebracht sein, die weiters auch die Schlitze zwischen den Lamellen 4 überdecken können.

In einem etwas modifizierten Ausführungsbeispiel könnten die Führungsschienen 8 auch kürzer ausgebildet sein, wobei die Lamellen-Jalousien im zurückgezogenen Zustand auf der von der Fahrzeugscheibe 1 abgewandten Seiten über die Führungsschienen vorstehen. Es wären dann die Lamellen auch im auf dieser von der Fahrzeugscheibe abgewandten Seite über die Führung 7 vorstehenden Zustand sich gegenseitig abstützend auszubilden. Dies kann wiederum in analoger Weise erreicht sein, wobei in diesem Fall, wie aus Fig. 7 schematisch ersichtlich ist Verbindungsteile 11 und 11' verschwenkbar oder verschiebbar an bzw. in den Lamellen gelagert sind. Beim Ausfahren der Lamellen auf der der Fahrzeugscheibe 1 zugewandten Seite der Führungsschienen werden die Verbindungsteile 11 in Ihre mit einer benachbarten Lamelle zusammenwirkende Position verschwenkt und beim Ausfahren der rückseitigen Lamellen auf der von der Fahrzeugscheibe 1 abgewandten Seite der Führung 7 (beim Hinaufziehen der Lamellen-Jalousie 2) werden die Verbindungsteile 11' in analoger Weise in eine mit einer benachbarten Lamelle 4 zusammenwirkende Position verschwenkt. Die Führungsschienen 8 weisen hierbei sowohl an Ihren vorderen als auch an ihren rückseitigen Enden gerade Abschnitte auf, in welchen verzahnte Abschnitte der Führungsschienen ausgebildet sind, die mit Verzahnungen an den Außenrändern der Lamellen 11 bzw. mit Verzahnungen an den Außenrändern der Lamellen 11' zusammenwirken. Zwischen diesen beiden endseitigen geraden Abschnitten, die sich jeweils mindestens über die Breite von zwei Lamellen erstrecken, weisen die Führungsschienen 8 gebogene Abschnitte zur Anpassung an den Fahrzeughimmel 15 auf.

### Legende zu den Hinweisziffern:

- 1: Fahrzeugscheibe
- 2: Lamellen-Jalousie
- 3: Längsrand
- 4: Lamelle
- 5: Band
- 6: Öffnung
- 7: Führung
- 8: Führungsschiene
- 9: Seitenrand
- 10: Hohlraum
- 11: Verbindungsteil
- 12: Achse
- 13: Verzahnung
- 14: Verzahnung
- 15: Fahrzeughimmel
- 16: Seilrolle
- 17: Achse
- 18: Zugseil
- 19: Polsterung

## Patentansprüche

1. Sonnenblendschutzeinrichtung für ein Fahrzeug mit mindestens einer aus- und einfahrbaren Jalousie, mittels der ein oberer Bereich einer Fahrzeugscheibe abdeckbar ist und die als Lamellen-Jalousie (2) ausgebildet ist, welche mehrere Lamellen (4) aufweist, die mit ihren Längsrändern (3) aneinander angrenzen und flexibel miteinander verbunden sind, wobei die Lamellen-Jalousie (2) in einem oberhalb der Fahrzeugscheibe (1) liegenden Bereich von einer Führung (7) geführt und getragen ist, **dadurch gekennzeichnet, dass** die im abgesenkten Zustand der Lamellen-Jalousie (2) den oberen Bereich der Fahrzeugscheibe (1) überdeckenden Lamellen sich gegenseitig abstützen, wobei an den Lamellen (4) Verbindungsteile (11) verschwenkbar oder verschiebbar gelagert sind, welche beim Absenken der Lamelle (4) in einen unterhalb der Führung (7) liegenden Bereich von einer stationären Betätigungseinrichtung in eine mit einer benachbarten Lamelle (4) zusammenwirkende Position verschwenkbar oder verschiebbar sind und beim Anheben der Lamelle (4) in einen von der Führung (7) geführten Bereich in eine von der benachbarten Lamelle (4) zurückgezogene Position verschwenkbar oder verschiebbar sind.

2. Sonnenblendschutzeinrichtung nach Anspruch 1 **dadurch gekennzeichnet, dass** die Betätigungseinrichtung von einer Zahnstange mit einer Verzahnung (14) gebildet wird, die mit einer kreisbogenförmigen Verzahnung (13) am Rand eines jeweiligen verschwenkbaren Verbindungsteils (11) zusammenwirkt.

3. Sonnenblendschutzeinrichtung nach Anspruch 1 oder Anspruch 2 **dadurch gekennzeichnet, dass** ein jeweiliges Verbindungsteil (11) in einem Hohlraum (10) der Lamelle (4) angeordnet ist, der zu einem Längsrand (3) der Lamelle (4) hin offen ist, und in der benachbarten Lamelle (4) ebenfalls ein zum benachbarten Längsrand (3) ein offener Hohlraum (10) vorgesehen ist, in den das Verbindungsteil (11) in seiner mit der benachbarten Lamelle (4) zusammenwirkenden Position hineinragt.

4. Sonnenblendschutzeinrichtung nach Anspruch 3 **dadurch gekennzeichnet, dass** die Hohlräume (10) in beidseitigen Randbereichen der Lamellen (4) ausgebildet sind.

5. Sonnenblendschutzeinrichtung nach einem der Ansprüche 1 bis 4 **dadurch gekennzeichnet, dass** die Führungen (7) von Führungsschienen (8) mit U-förmigen Aufnahmen gebildet werden, in welche die Seitenränder (9) der Lamellen (4) ragen, wobei die Führungsschienen (8) gezahnte Abschnitte aufweisen, welche Zahnstangen zum zusammenwirken mit Verzahnungen (13) der Verbindungsteile (11) darstellen.

6. Sonnenblendschutzeinrichtung nach einem der Ansprüche 1 bis 5 **dadurch gekennzeichnet, dass** in den Lamellen (4) weitere Verbindungsteile (11') verschwenkbar oder verschiebbar gelagert sind, welche beim Hinaufziehen der Lamelle in einen rückseitig der Führung (7) liegenden Bereich von einer stationären Betätigungseinrichtung in eine mit einer benachbarten Lamelle (4) zusammenwirkende Position verschwenkbar oder verschiebbar sind und beim Absenken der Lamellen-Jalousie (2) und Einfahren in einen von der Führung (7) geführten Bereich in eine von der benachbarten Lamelle (4) zurückgezogene Position verschwenkbar oder verschiebbar ist.

## Claims

1. A sun-shielding anti-glare device for a vehicle, comprising at least one extendable and retractable blind, by means of which an upper region of a vehicle window may be covered and which is a slatted blind (2) which has several slats (4) adjoining one another with their longitudinal edges (3) and flexibly joined together, wherein the slatted blind (2) is guided and supported in a region lying above the vehicle window (1) by a guide (7), the slats covering the upper region of the vehicle window (1) in the lowered state of the slatted blind (2) mutually support one another, connecting parts (11) are pivotably or displaceably mounted on the slats (4) which, when the slat (4) is lowered into a region lying below the guide (7), are pivotable or displaceable by a fixed operating device into a position cooperating with an adjacent slat (4) and, when the slat (4) is raised into a region guided by the guide (7), are pivotable or displaceable into a position drawn back from the adjacent slat (4).

2. A sun-shielding anti-glare device according to Claim 1, **characterised in that** the operating device is formed by a toothed rack with a toothing (14) which cooperates with a circular arc-shaped toothing (13) on the edge of a respective pivotable connecting part (11).

3. A sun-shielding anti-glare device according to Claim 1 or Claim 2, **characterised in that** a respective connecting part (11) is arranged in a cavity (10) of the slat (4) which is open towards a longitudinal edge (3) of the slat (4), and in the adjoining slat (4) a cavity (10) is similarly provided which is open towards the adjacent longitudinal edge (3), into which cavity the connecting part (11) projects in its position cooperating with the adjacent slat (4).

4. A sun-shielding anti-glare device according to Claim 3, **characterised in that** the cavities (10) are formed in edge regions on both sides of the slats (4).

5. A sun-shielding anti-glare device according to one of Claims 1 to 4, **characterised in that** the guides (7) are formed by guide rails (8) with U-shaped receptacles into which the side edges (9) of the slats (4) project, wherein the guide rails (8) have toothed portions which represent toothed racks for cooperating with toothings (13) of the connecting parts (11).

6. A sun-shielding anti-glare device according to one of Claims 1 to 5, **characterised in that** further connecting parts (11') are pivotably or displaceably mounted in the slats (4), which, when the slat is drawn up into a region lying on the rear side of the guide (7), are pivotable or displaceable by a fixed operating device into a position cooperating with an adjacent slat (4) and, when the slatted blind (2) is lowered and retracted into a region guided by the guide (7), are pivotable or displaceable into a position drawn back from the adjacent slat (4).

## Revendications

1. Dispositif pare-soleil et anti-éblouissement pour un véhicule, comprenant au moins un store insérable permettant de recouvrir une zone supérieure d'une vitre de véhicule et configuré sous forme de store à lamelles (2) présentant plusieurs lamelles (4) reliées les unes aux autres de façon flexible et dont les bords longitudinaux (3) sont adjacents, le store à lamelles (2) étant introduit et guidé par une glissière (7) dans une zone située au-dessus de la vitre du véhicule (1),
**caractérisé en ce que**
les lamelles recouvrant la zone supérieure de la vitre du véhicule (1), dans l'état abaissé du store à lamelles (2), se soutiennent mutuellement, et comportent des pièces de liaison (11) logées de façon pivotante ou mobile sur les lamelles (4) qui, lors de l'abaissement de la lamelle (4) dans une zone située en dessous de la glissière (7) pivotent ou coulissent par un dispositif d'actionnement stationnaire, dans une position coopérant avec une lamelle voisine (4) et qui, lors du levage de la lamelle (4) dans une zone guidée par la glissière (7), pivotent ou coulissent dans une position en retrait de la lamelle voisine (4).

2. Dispositif pare-soleil et anti-éblouissement selon la revendication 1,
**caractérisé en ce que**
le dispositif d'actionnement est formé par une crémaillère dotée d'une denture (14), qui coopère avec une denture (13) en forme d'arc de cercle située sur le bord d'une pièce de liaison pivotante respective (11).

3. Dispositif pare-soleil et anti-éblouissement selon la revendication 1 ou 2,
**caractérisé en ce qu'**
une pièce de liaison respective (11) est disposée dans un espace creux (10) de la lamelle (4) ouvert vers un bord longitudinal (3) de la lamelle (4), et il est prévu dans la lamelle voisine (4) également un espace creux (10) ouvert vers le bord longitudinal voisin (3), dans lequel dépasse la pièce de liaison (11) dans sa position coopérant avec la lamelle voisine (4).

4. Dispositif pare-soleil et anti-éblouissement selon la revendication 3,
**caractérisé en ce que**
les espaces creux (10) sont configurés dans des zones de bordure situées sur les deux côtés des lamelles (4).

5. Dispositif pare-soleil et anti-éblouissement selon l'une des revendications 1 à 4,
**caractérisé en ce que**
les glissières (7) sont formées par des rails de guidage (8) dotés de logements en forme de U dans lesquels dépassent les bord latéraux (9) des lamelles (4), les glissières (8) présentant des sections dentées qui représentent des crémaillères coopérant avec des dentures (13) des pièces de liaison (11).

6. Dispositif pare-soleil et anti-éblouissement selon l'une des revendications 1 à 5,
**caractérisé en ce que**
dans les lamelles (4) sont logées de façon pivotante ou mobile d'autres pièces de liaison (11') qui, lors du levage de la lamelle dans une zone située derrière la glissière (7) par un dispositif d'actionnement stationnaire, sont pivotantes ou mobiles dans une position coopérant avec une lamelle voisine (4) et, lors de l'abaissement du store à lamelles (2) et de son introduction dans une zone guidée par la glissière (7), sont pivotantes ou mobiles dans une position en retrait de la lamelle voisine (4).
